# EUROPÄISCHE PATENTSCHRIFT

(11) **EP 3 728 851 B1**
(45) Veröffentlichungstag und Bekanntmachung des Hinweises auf die Patenterteilung: **28.02.2024**
(21) Anmeldenummer: 18826984.9
(22) Anmeldetag: 12.12.2018
(51) Int. Cl.: F04C 14/24, F04C 2/344, F01C 21/08, F04C 11/00

(54) **FLÜGELZELLENPUMPE**
VANE PUMP
POMPE À PALETTES

(30) Priorität: 21.12.2017 DE 102017223530
(43) Veröffentlichungstag der Anmeldung: 28.10.2020
(73) Patentinhaber: ZF Friedrichshafen AG, 88046 Friedrichshafen (DE)
(72) Erfinder: PÖHNLEIN, Florian, 88682 Weildorf (Salem) (DE)
(86) Internationale Anmeldenummer: PCT/EP2018/084456
(87) Internationale Veröffentlichungsnummer: WO 2019/121188

(56) Entgegenhaltungen:
- WO-A2-2011/042105
- DE-A1-102013 224 660
- DE-B3-102014 222 322

## Beschreibung

Die Erfindung betrifft eine Flügelzellenpumpe sowie ein Verfahren zum Betreiben dieser Flügelzellenpumpe.

Die radial in den Führungsschlitzen des Rotors beweglichen Flügel einer Flügelzellenpumpe müssen im Betrieb von einer bestimmten Mindest-Andruckkraft mit ihrer Flügelaußenseite gegen den Hubring gedrückt werden, um die zwischen den Flügeln ausgebildeten Arbeitsräume zuverlässig abzudichten. Grundsätzlich werden im Betrieb die Flügel von der Fliehkraft radial nach außen gegen den Hubring gedrückt. Um die erforderliche Andruckkraft auch bei niedrigen Drehzahlen - und damit geringen Fliehkräften auf die Flügel - sicher zu stellen, ist es bekannt, dass Flügelzellenpumpen eine so genannte Hinterflügeldruckbeaufschlagung aufweisen. Hierbei wird die radial nach innen gewandte Seite eines Flügels, welche nachfolgend als Flügelinnenseite bezeichnet wird, mit einem Hinterflügeldruck beaufschlagt, so dass der Flügel nach außen gegen den Hubring gedrückt wird. Hierdurch ist gewährleistet, dass die Flügel mit deren Flügelaußenseite auch bei niedrigen Drehzahlen an dem Hubring sicher anliegen. Dies hat sowohl positive Wirkungen auf das Ansaugverhalten als auch auf den volumetrischen Wirkungsgrad der Flügelzellenpumpe insbesondere im unteren Drehzahlbereich. Eine Hinterflügeldruckbeaufschlagung kann sowohl bei Flügelzellenpumpen mit veränderlichem Verdrängungsvolumen als auch mit festem Verdrängungsvolumen eingesetzt werden.

Eine solche Hinterflügeldruckbeaufschlagung ist aus der DE 19546329 A1 bekannt, welche eine doppelhubige Flügelzellenpumpe mit festem Verdrängungsvolumen offenbart. Diese weist eine Steuer- und eine Stirnplatte auf, welche die Flügelzellenpumpe in axialer Richtung begrenzen. Durch mit der Druckseite der Flügelzellenpumpe verbundene Ringkanäle, welche als kreisringsektorförmige Vertiefungen in Stirn- und Steuerplatte konzentrisch zur Drehachse des Rotors und innerhalb des Außendurchmessers des Rotors ausgebildet sind, werden so genannte Hinterflügelräume druckbeaufschlagt. Hierdurch werden die Flügel radial nach außen gegen den Hubring gedrückt. Die Ringkanäle werden nachfolgend auch als Hinterflügeldruckkanäle bezeichnet.

Ein Hinterflügelraum ist der radial innenliegende Teil eines Führungsschlitzes im Rotor einer Flügelzellenpumpe, wobei der Hinterflügelraum radial nach außen von einer Flügelinnenseite des Flügels begrenzt wird. Axial wird der Hinterflügelraum von der Steuer- und der Stirnplatte begrenzt. Der Druck, der in den Hinterflügelräumen herrscht, wird auch als Hinterflügeldruck bezeichnet. Der Hinterflügeldruck beaufschlagt als wirksame Druckfläche die Fläche der Flügelinnenseite in radialer Projektion und erzeugt hieraus eine radial nach Außen gerichtete Kraft auf den Flügel. Hierbei weist die Flügelzellenpumpe einen saugseitigen Hinterflügeldruckkanal und einen druckseitigen Hinterflügeldruckkanal auf. Der saugseitige Hinterflügeldruckkanal erstreckt sich über den Winkelbereich der Flügelzellenpumpe, in welchem sich bei einer Drehung des Rotors die Arbeitsräume zwischen den Flügeln vergrößern, so dass das zu fördernde Betriebsmedium (üblicherweise Getriebeöl) angesaugt wird. Dieser Winkelbereich wird deshalb auch als Saugbereich bezeichnet. Die Flügel bewegen sich hierbei in ihren Führungsschlitzen nach außen, so dass sich die Hinterflügelräume vergrößern.

Der druckseitige Hinterflügeldruckkanal erstreckt sich über den Winkelbereich der Flügelzellenpumpe, in welchem sich bei einer Drehung des Rotors die Arbeitsräume zwischen den Flügeln verkleinern, so dass das geförderte Betriebsmedium verdrängt wird. Dieser Winkelbereich wird nachfolgend auch als Verdrängungsbereich bezeichnet. Die Flügel bewegen sich bei einer Drehung des Rotors über den Verdrängungsbereich in ihren Führungsschlitzen radial nach innen, so dass sich die Hinterflügelräume verkleinern und das Betriebsmedium aus den Hinterflügelräumen in den druckseiteigen Hinterflügeldruckkanal verdrängt wird.

Der saugseitige und der druckseitige Hinterflügeldruckkanal sind durch Engstellen miteinander verbunden. Diese Engstellen wirken als hydraulische Widerstände und können beispielsweise als Drosselstellen oder Dorsselventile oder Blenden ausgebildet sein. Üblicherweise ist der saugseitige Hinterflügeldruckkanal mit der Druckseite der Flügelzellenpumpe verbunden und wird somit von einem Druck beaufschlagt, welcher nachfolgend als Pumpendruck bezeichnet wird.

Die Wirkungsweise dieser Anordnung ist wie folgt: Im Verdrängungsbereich wirkt der Pumpendruck auf die Flügelaußenseiten und drückt diese entgegen der Fliehkraft radial nach innen. Um die Flügelaußenseiten sicher am Hubring zu halten, muss der Hinterflügeldruck im druckseitigen Hinterflügeldruckkanal größer sein als der Pumpendruck, welcher im Verdrängungsbereich in den Arbeitsräumen der Flügelzellenpumpe herrscht. Dies lässt sich durch die nachfolgend beschriebene Anordnung der hydraulischen Widerstände zwischen saug- und druckseitigem Hinterflügeldruckkanal sowie der Verbindung des saugseitigen Hinterflügeldruckkanals mit der Druckseite der Flügelzellenpumpe erreichen: bei der Drehbewegung des Rotors der Flügelzellenpumpe werden die Flügel wie beschrieben aufgrund der Fliehkraft und des Hinterflügeldrucks mit ihrer Flügelaußenseite gegen den Hubring gedrückt und gleiten an diesem entlang, so dass die Flügel zwangsläufig über einer Umdrehung eine Hubbewegung im Schlitz ausführen. Der Pumpendruck wirkt durch eine hydraulische Verbindung im saugseitigen Hinterflügeldruckkanal und durch eine Engstelle auch im druckseitigen Hinterflügeldruckkanal. Im saugseitigen Hinterflügeldruckkanal drückt der dem Pumpendruck entsprechende saugseitige Hinterflügeldruck die Flügel zuverlässig gegen den Hubring, so dass ein sicheres Ansaugen der Flügelzellenpumpe gewährleistet ist. Erreichen die Hinterflügelräume das Ende des Saugbereiches bzw. das Ende des saugseitigen Hinterflügeldruckkanals ist das Volumen des jeweiligen Hinterflügelraums aufgrund des Hubes des jeweiligen Flügels maximal und mit dem Pumpendruck beaufschlagt.

Bei der weiteren Rotordrehung über den sich nun anschließenden Verdrängungsbereich werden die Flügel nach innen geschoben, so dass sich das Volumen des jeweiligen Hinterflügelraums verkleinert und das Betriebsmedium wie oben beschrieben aus diesem verdrängt wird. Somit wird das Betriebsmedium in den Hinterflügelräumen vom Saugbereich zum Druck- oder Verdrängungsbereich gefördert. Die Kräfteverhältnisse an einem Flügel sind wie folgt: radial nach außen wirkt die bei einer Drehung des Rotors auftretende Fliehkraft und die Kraft aus dem Hinterflügeldruck, der auf die Flügelinnenseite wirkt. Dem entgegen wirkt die Kraft aus dem Pumpendruck, der auf die Flügelaußenseite wirkt. Da die Fliehkraft mit der Drehzahl sinkt, muss der druckseitige Hinterflügeldruck größer sein als der Pumpendruck.

Aufgrund der hydraulischen Widerstände kann das aus den Hinterflügelräumen verdrängte Betriebsmedium nun nicht ungehindert von dem druckseitigen zum saugseitigen Hinterflügeldruckkanal strömen. Hierdurch steigt der Hinterflügeldruck im druckseitigen Hinterflügeldruckkanal über den Pumpendruck hinaus an, so dass auch im Druckbereich die Flügelaußenseiten zuverlässig am Hubring anliegen. Wäre der druckseitige Hinterflügeldruckkanal direkt mit dem Druckbereich der Flügelzellenpumpe verbunden, so würde im Hinterflügeldruckkanal nur der Pumpendruck herrschen, wodurch die Drücke auf Flügelaußenseite und Flügelinnenseite gleich wären und die Flügelaußenseiten im Verdrängungsbereich nicht eindeutig am Hubring anliegen würden.

Die Größe des hydraulischen Widerstandes (Drossel oder Blende) wird beispielsweise durch den Strömungsquerschnitt oder durch einen Widerstandsbeiwert oder durch eine Druckdifferenz zwischen dem Druck vor und nach dem hydraulischen Widerstand bestimmt. Diese Druckdifferenz wird nachfolgend auch als Druckverlust bezeichnet. Durch den mit dem hydraulischen Widerstand steigenden Hinterflügeldruck werden die Flügelaußenseite entgegen dem Pumpendruck in den Arbeitsräumen der Flügelzellenpumpe an den Hubring gedrückt, so dass diese eine entsprechende Dichtwirkung erreichen. Zwischen Hubring und Flügelaußenseite entstehen hierdurch naturgemäß Reibungskräfte, welche zwar ein Verlustmoment und damit eine Verlustleistung erzeugen, jedoch zur sicheren Funktion der Flügelzellenpumpe nicht vermeidbar sind.

Bei der Auslegung des hydraulischen Widerstands wird dieser so gewählt, dass der druckseitige Hinterflügeldruck bei einer bestimmten Drehzahl zum einen zur sicheren Abdichtung der Arbeitsräume ausreicht und zum anderen diesen Wert nicht deutlich übersteigt, so dass sich die durch die Andruckkraft der Flügel entstehenden Reibkräfte in Grenzen halten. Die bestimmte Drehzahl liegt hierbei vorzugsweise im unteren Drehzahlbereich, da hier die Fliehkräfte am geringsten sind.

Mit steigender Drehzahl erhöht sich der durch die Hinterflügelräume geförderte Volumenstrom und damit (entsprechend der Gleichung für einen Durchfluss durch einen hydraulischen Widerstand) der Hinterflügeldruck im druckseitigen Hinterflügeldrucckanal. Hierdurch übersteigt die Radialkraft zwischen Flügelaußenseite und Hubring die zum sicheren Abdichten erforderliche Kraft, wodurch nachteiliger weise die Verlustleistung ansteigt und sich der Wirkungsgrad der Pumpe verschlechtert. Weitere mögliche unerwünschte Effekte durch eine zu hohe Andruckkraft bzw. einen zu hohen Hinterflügeldruck sind Verschleiß an Hubring und Flügelaußenseite sowie Geräusch.

Eine steigende Viskosität des Betriebsmediums bei tiefen Temperaturen hat ebenfalls einen unerwünschten Anstieg des Hinterflügeldrucks zur Folge. Mit der Viskosität des Öls steigt auch der hydraulische Widerstand, bzw. der Druckverlust an der Drosselstelle. Hierdurch entsteht im druckseitigen Hinterflügeldruckkanal ein höherer Druck als bei normaler Betriebstemperatur, wodurch sich die Anpresskraft des Flügels an den Hubring und das Antriebsmoment der Flügelzellenpumpe erhöhen und in nachteiliger Weise Wirkungsgrad und Lebensdauer beeinträchtigen.

Aus der DE 10 2014 222322 B3 ist eine gattungsgemäße Flügelzellenpumpe bekannt, welche eine Ventileinrichtung zwischen dem druckseitigen Hinterflügeldruckkanal und dem saugseitigen Hinterflügeldruckkanal aufweist, wobei die Höhe eines druckseitigen Hinterflügeldrucks mittels der Ventileinrichtung einstellbar ist.

Die der Erfindung zugrunde liegende Aufgabe ist es, eine Flügelzellenpumpe zu schaffen, bei welcher über möglichst alle Betriebsbereiche eine zuverlässige Abdichtung zwischen Flügeln und Hubring gegeben ist, ohne den Gesamtwirkungsgrad und das Verschleißverhalten der Flügelzellenpumpe zu verschlechtern. Insbesondere sollte der druckseitige Hinterflügeldruck unterhalb eines zulässigen Maximalwertes begrenzt werden, um diese negativen Effekte auf Wirkungsgrad und Verschleißverhalten zu reduzieren.

Diese Aufgabe wird gelöst mit einer Flügelzellenpumpe mit den Merkmalen des Patentanspruchs 1 bei der die Höhe des Hinterflügeldrucks einstellbar ist.

Unter dem Begriff "einstellbar" ist in diesem Zusammenhang zu verstehen, dass mittels der Ventileinrichtung der druckseitige Hinterflügeldruck auf einen konstanten o der veränderbaren Wert eingestellt werden kann.

Dabei ist die Ventileinrichtung zwischen dem druckseitigen Hinterflügeldruckkanal und dem saugseitigen Hinterflügeldruckka- nal angeordnet, so dass der druckseitige Hinterflügeldruckkanal durch die Ventilein- richtung mit dem saugseitigen Hinterflügeldruckkanal verbindbar ist. Hierdurch kann die Ventileinrichtung mit geringstem Bauraumbedarf angeordnet werden. Zudem ist es möglich, den druckseitigen Hinterflügeldruck auf das Niveau des Pumpendrucks abzusenken, indem der hydraulische Widerstand der Ventileinrichtung auf Null ver- ringert wird. Der druckseitige Hinterflügeldruck entspricht dann dem saugseitigen Hinterflügeldruck und damit dem Pumpendruck.

Unter dem hydraulischen Widerstand der Ventileinrichtung sind sowohl die Druckverluste bei der Durchströmung der Ventileinrichtung bei einer Ausgestaltung als Drosselventil oder als Blende als auch ein Öffnungsdruck bei einer Ausgestaltung als Druckbegrenzungsventil zu verstehen.

Vorteilhafte Ausgestaltungen der Erfindung ergeben sich aus den Unteransprüchen.

Der druckseitige Hinterflügeldruckkanal kann in einer weiteren Ausgestaltung durch eine Ventileinrichtung mit einem veränderlichen Widerstand mit der Druckniere oder der Druckseite der Flügelzellenpumpe verbunden sein.

Es können zudem zwischen verschiedenen Bereichen der druck- und saugseitigen Hinterflügeldruckkanäle mehrere Ventileinrichtungen angeordnet sein, so dass mehr Strömungsquerschnitt zur Verfügung steht und der druckseitige Hinterflügeldruck schneller verändert werden kann.

Ebenso kann vorgesehen sein, dass die Ventileinrichtung zwischen dem druckseitigen Hinterflügeldruckkanal und einem Bereich der Saugseite der Flügelzellenpumpe angeordnet ist.

Vorteilhafterweise weist die Ventileinrichtung einen veränderbaren hydraulischen Widerstand auf. Durch die Veränderung des Widerstandes kann der die Ventileinrichtung vom druckseitigen Hinterflügeldruckkanal zum saugseitigen Hinterflügeldrucckanal durchströmende Volumenstrom und damit der druckseitige Hinterflügeldruck verändert werden.

Sollten mehrere Ventileinrichtungen in der Flügelzellenpumpe angeordnet sein, können diese gleich oder unterschiedlich - als Drosseln, Blenden oder Druckbegrenzungsventile ausgebildet sein.

In einer bevorzugten Ausgestaltung der Erfindung ist vorgesehen, dass der hydraulische Widerstand der Ventileinrichtung mittels einer elektronischen Getriebesteuerung in Abhängigkeit einer oder mehrerer Betriebsgrößen verstellbar ist. Die Betriebsgrö-ßen, die in der elektronischen Getriebesteuerung erfasst werden, sind physikalische Werte, welche den Betriebszustand der Flügelzellenpumpe angeben, wie beispielsweise die Temperatur des Betriebsmediums, die Pumpendrehzahl oder der Druck im druckseitigen Hinterflügeldruckkanal.

Ebenso können Ströme der elektronischen Getriebesteuerung erfasst werden, welche Aufschluss über einen von der Pumpe erzeugten Pumpendruck geben.

Es ist möglich, dass die Flügelzellenpumpe eine Sensoreinrichtung aufweist, welche den druckseitigen Hinterflügeldruck erfasst.

Vorteilhafterweise erfolgt die Veränderung des druckseitigen Hinterflügeldrucks in Abhängigkeit unterschiedlicher Betriebsparameter erfolgt, welche in der elektronischen Getriebesteuerung erfasst werden.

Es ist darüber hinaus möglich, dass nach einem Startsignal der Flügelzellenpumpe nach Ablauf einer bestimmten Zeitdauer der druckseitige Hinterflügeldruck reduziert wird. Diese Zeitdauer nach deren Ablauf man weiß, dass der druckseitige Hinterflügeldruck nicht mehr auf einen Maximalwert angehoben werden muss und nun abgesenkt werden kann, kann zuvor experimentell bestimmt werden.

Es kann zudem vorgesehen sein, dass der hydraulische Widerstand der Ventileinrichtung mittels eines Aktuators verstellbar ist.

Bei einer bevorzugten Ausgestaltung der Flügelzellenpumpe sind in einer Axialplatte der Flügelzellenpumpe axial und/oder radial gerichtete Kanäle ausgebildet, welche die druck- und saugseitgen Hinterflügeldruckkanäle mit der Ventileinrichtung verbinden.

Eine vorteilhafte Ausgestaltung sieht vor, dass der druckseitige Hinterflügeldruckkanal und der saugseitige Hinterflügeldruckkanal hydraulisch miteinander verbunden sind, wobei zwischen dem druckseitigen Hinterflügeldruckkanal und dem saugseitigen Hinterflügeldruckkanal ein hydraulischer Widerstand ausgebildet ist. Außerdem ist ein Druckbegrenzungsventil zwischen dem druckseitigen Hinterflügeldruckkanal und dem Druckkanal bzw. der Druckseite der Flügelzellenpumpe angeordnet. Das Druckbegrenzungsventil ist dabei derart angeordnet, dass dieses vom druckseitigen Hinterflügeldruckkanal her durchströmbar ist, so dass der druckseitige Hinterflügeldruck mittels des Druckbegrenzungsventils begrenzbar ist. Alternativ hierzu kann der druckseitige Hinterflügeldruckkanal durch das Druckbegrenzungsventil mit einem Saugkanal der Flügelzellenpumpe oder einem drucklosen Bereich des Automatikgetriebes verbindbar sein.

Bevorzugt kann der hydraulische Widerstand als Drossel oder als Blende ausgebildet sein.

Es ist möglich, dass die Flügelzellenpumpe als einhubige (oder auch als einflutig bezeichnete) oder mehrhubige (auch als mehrflutig bezeichnete) Flügelzellenpumpe ausgebildet ist. Bei einer einhubigen Flügelzellenpumpe ist der Rotor exzentrisch zu einem kreisrunden Hubring angeordnet, so dass die Flügel über eine Umdrehung des Rotors einen vollständigen Hub ausführen, d.h. dass sich die Flügel pro Umdrehung ein Mal an ihrer radial innersten Position und ein Mal an ihrer radial äußersten Position befinden. Bei einer zweihubigen Flügelzellenpumpe befinden sich die Flügel bei einer Umdrehung des Rotors jeweils zwei Mal an ihrer radial innersten und zwei mal an ihrer radial äußersten Position. Da eine einhubige Flügelzellenpumpe nur einen Sauganschluss bzw. einen Druckanschluss aufweist wird diese auch als einflutig bezeichnet. Eine zweihubige Flügelzellenpumpe hingegen weist zwei autarke Fördereinheiten auf, die theoretisch zwei getrennte Verbraucher mit unterschiedlichen Drücken bzw. Förderströmen versorgen können. Daher weist eine zweihubige Flügelzellenpumpe auch zwei Saug- bzw. Druckanschlüsse auf, weshalb diese auch als zweiflutige Flügelzellenpumpe bezeichnet wird.

Eine einhubige Flügelzellenpumpe weist in der Regel nur jeweils einen saugseitigen Hinterflügeldruckkanal und einen druckseitigen Hinterflügeldruckkanal auf. Eine zweihubige Flügelzellenpumpe weist in der Regel zwei druckseitige und zwei saugseitige Hinterflügeldruckkanäle auf, die jeweils durch Ventileinrichtungen wie oben beschrieben miteinander verbunden sind.

Es ist ein Verfahren zum Betreiben einer vorab ausgestalteten Flügelzellenpumpe angegeben bei dem ein Istwert des druckseitigen Hinterflügeldrucks und bestimmte Betriebsparameter erfasst werden und der Istwert mit einem den Betriebsparametern zugeordneten Sollwert des Hinterflügeldrucks verglichen wird, wobei bei einer Abweichung des Istwerts von dem Sollwert der druckseitige Hinterflügeldruck durch eine Veränderung des hydraulischen Widerstands der Ventileinrichtung an den Sollwert angepasst wird.

Hierbei ist es vorgesehen, dass der Istwert des druckseitigen Hinterflügeldrucks von einem Drucksensor gemessen wird.

Alternativ hierzu ist ein Verfahren zum Betreiben einer Flügelzellenpumpe angegeben, in welchem ein Istwert mindestens eines bestimmten Betriebsparameter erfasst wird, welcher indirekt einen Aufschluss über die Höhe des druckseitigen Hinterflügeldrucks gib, wonach dieser Istwert mit einem den Betriebsparametern zugeordneten Sollwert verglichen wird, wobei bei einer Abweichung des Istwerts von dem Sollwert der druckseitige Hinterflügeldruck durch eine Veränderung des hydraulischen Widerstands der Ventileinrichtung an den Sollwert angepasst wird bis Istwert des bestimmten Betriebsparameters mit seinem Sollwert übereinstimmt.

Ein erfasster Betriebsparameter kann hierbei die Temperatur der Pumpe oder des Betriebsmediums sein, da hierdurch Rückschlüsse möglich sind, ob ein Kaltstart vorliegt, bei welchem auf einen ausreichenden Anpressdruck der Flügel im Druckbereich der Flügelzellenpumpe zu achten ist.

Als weitere Alternative kann bei einem Kaltstart der druckseitige Hinterflügeldruck eine bestimmte Zeitdauer angehoben bleiben und nach dieser Zeitdauer, welche eine experimentell gewonnene Länge aufweist, abgesenkt werden, so dass das Kaltansaugen bei einem Kaltstart gewährleistet ist und danach die Reibung der Flügel nicht zum Nachteil des Wirkungsgrades auf einem zu hohen Niveau bleibt.

In einer bevorzugten Ausgestaltung ist vorgesehen, dass die Flügelzellenpumpe eine Ventileinrichtung aufweist, mittels welcher zumindest in einem ersten Betriebszustand zumindest ein Hinterflügeldruckkanal von dem Druckbereich der Pumpe hydraulisch trennbar ist und zumindest ein Hinterflügeldruckkanal mit einem drucklosen Bereich verbindbar ist, und dass in einem zweiten Betriebszustand zumindest ein Hinterflügeldruckkanal mit dem Druckbereich der Flügelzellenpumpe verbindbar ist.

Es ist außerdem möglich, dass die Flügelzellenpumpe mindestens zweihubig ausgebildet ist und somit mindestens zwei druckseitige Hinterflügeldruckkanäle und mindestens zwei saugseitige Hinterflügeldruckkanäle aufweist. Die vorgenannten Ausgestaltungen sind dann in jedem autarken Teil einer mehrhubigen Flügelzellenpumpe zwischen saugseitigen und druckseitigen Bereichen ausgebildet. Saugseitige und druckseitige Bereiche umfassen Hinterflügeldruckkanäle, Druck- und Saugnieren sowie Saug- und Druckleitungen.

Für eine derart ausgestaltete Flügelzellenpumpe ist ein Verfahren angegeben, bei welchem in einem unteren Drehzahlbereich beim oder nach dem Starten der Flügelzellenpumpe zunächst der druckseitige Hinterflügeldruck mittels der Ventileinrichtung angehoben wird während der saugseitige Hinterflügeldruckkanal mit der Druckseite der Flügelzellenpumpe verbunden und der druckseitige Hinterflügeldruckkanal von einem drucklosen Bereich getrennt ist. Beim Erreichen eines zweiten Drehzahl- oder Druckwertes wird der hydraulische Widerstand der Ventileinrichtung zwischen den Hinterflügeldruckkanälen verringert, so dass der druckseitige Hinterflügeldruck absinkt. Bei einer weiteren Drehzahlsteigerung werden beim Erreichen eines dritten, höchsten Drehzahlwertes die Hinterflügeldruckkanäle von der Druckseite der Flügelzellenpumpe getrennt und mit einem drucklosen Bereich verbunden.

Zusätzlich kann in diesem Verfahren neben der Drehzahl der Flügelzellenpumpe noch eine Betriebstemperatur der Flügelzellenpumpe in der elektronischen Getriebesteuerung erfasst werden und bei einem Start der Flügelzellenpumpe bei einer Betriebstemperatur unterhalb einer bestimmten Temperatur der Widerstand der Ventileinrichtung zunächst so erhöht werden, dass der druckseitige Hinterflügeldruck über einen bestimmten Druckwert ansteigt, welcher ausreichend hoch gewählt ist um die Flügelenden an den Hubring zu drücken. Bei steigender Drehzahl wird der druckseitige Hinterflügeldruck mittels der Ventileinrichtung reduziert.

In einem Automatikgetriebe für ein Kraftfahrzeug ist vorteilhafterweise eine vorstehend beschriebene Flügelzellenpumpe angeordnet.

Ausführungsbeispiele der erfindungsgemäßen Flügelzellenpumpe sind in den Zeichnungen dargestellt und werden im Folgenden näher beschrieben.

Es zeigen
- Fig. 1: eine Flügelzellenpumpe nach dem Stand der Technik,
- Fig. 2: eine Stirnplatte einer Flügelzellenpumpe nach dem Stand der Technik,
- Fig. 3: eine Ausschnittsvergrößerung der Stirnplatte einer Flügelzellenpumpe,
- Fig. 4: eine Ausschnittsvergrößerung der Stirnplatte einer erfindungsgemäßen Flügelzellenpumpe,
- Fig. 5: eine Ausschnittsvergrößerung der Stirnplatte einer Flügelzellenpumpe,
- Fig. 6: eine Ausschnittsvergrößerung der Stirnplatte einer Flügelzellenpumpe,
- Fig. 7: ein Zeitdiagramm eines Verfahrens zum Betreiben einer Flügelzellenpumpe,
- Fig. 8: eine Ausschnittsvergrößerung der Stirnplatte einer erfindungsgemäßen Flügelzellenpumpe und
- Fig. 9: eine axiale Ansicht einer Stirnplatte einer doppelhubigen Flügelzellenpumpe in einer Ausgestaltung.

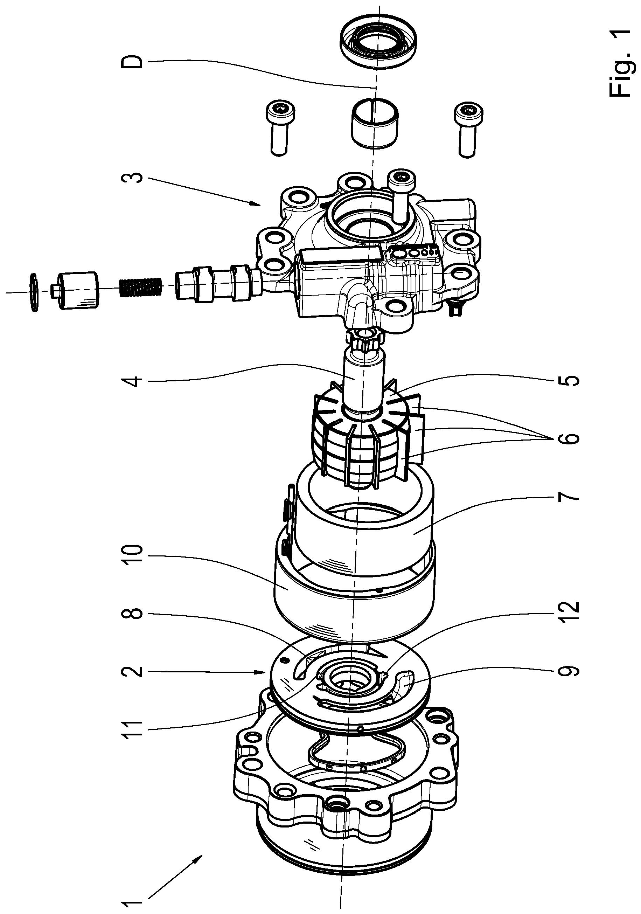

Fig. 1 zeigt eine Flügelzellenpumpe 1 nach dem Stand der Technik in einer Explosionsdarstellung. Die Flügelzellenpumpe 1 weist einen Rotor 5 mit in diesem radial verschiebbaren Flügeln 6 auf, deren radiale Bewegung von einem Hubring 7 begrenzt wird. Der Hubring 7 ist innerhalb eines ebenfalls ringförmigen Gehäuses 8 schwenkbar zur Verstellung des Verdrängungsvolumens der Flügelzellenpumpe 1 angeordnet. In axialer Richtung, d.h. längs der Richtung einer Drehachse D einer Pumpenwelle 4, wird die Flügelzellenpumpe 1 von einer ersten und einer zweiten Axialplatte begrenzt, wobei die erste Axialplatte als Stirnplatte 2 und die zweite Axialplatte als Deckelplatte 3 bezeichnet wird. In den Stirnflächen der Stirnplatte 2 und der Deckelplatte 3, welche jeweils axial dem Rotor 5 zugewandt sind, sind jeweils eine Druckniere und eine Saugniere sowie ein saugseitiger Hinterflügeldruckkanal und ein druckseitiger Hinterflügeldruckkanal als Vertiefungen ausgebildet. In der perspektivischen Darstellung von Fig. 1 ist sind aus Gründen der Übersichtlichkeit nur eine Druckniere 8, eine Saugniere 9, ein druckseitiger Hinterflügeldruckkanal 11 und ein saugseitiger Hinterflügeldruckkanal 12 der Stirnplatte 2 gezeigt. Die Darstellung der entsprechenden Kanäle in der Deckelplatte 3 ist zum Verständnis der Erfindung nicht erforderlich. Die Saugniere 9 und der saugseitige Hinterflügeldruckkanal 12 sowie die Druckniere 8 und der druckseitige Hinterflügeldruckkanal 11 sind jeweils zwei konzentrische Kreisbögen.

Die in Fig. 1 gezeigte Flügelzellenpumpe ist einhubig ausgestaltet. Auch bei einer doppelhubigen oder mehrhubigen Flügelzellenpumpe können Drosselstellen zwischen den druck- und saugseitigen Hinterflügeldruckkanälen ausgebildet sein.

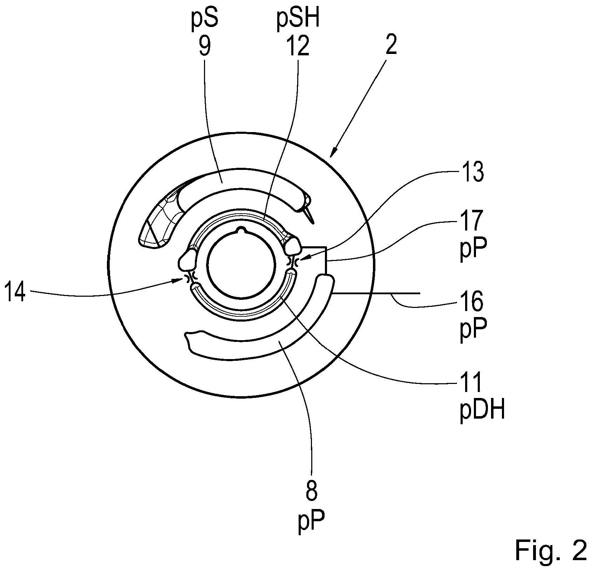

Fig. 2 zeigt eine schematische axiale Ansicht der Stirnplatte 2 nach dem Stand der Technik mit dem bereits in Fig. 1 gezeigten saugseitigen Hinterflügeldruckkanal 12 und dem druckseitigen Hinterflügeldruckkanal 11, sowie der Saugniere 9 und der Druckniere 8. Der im saugseitigen Hinterflügeldruckkanal 12 herrschende Druck wird nachfolgend als saugseitiger Hinterflügeldruck pSH und der im druckseitigen Hinterflügeldruckkanal 11 herrschende Druck als druckseitiger Hinterflügeldruck pDH bezeichnet. Die Druckniere 8 ist durch eine Druckleitung 16 mit der Druckseite der Flügelzellenpumpe 1 verbunden, in welcher ein Pumpendruck pP herrscht. Der saugseitige Hinterflügeldruckkanal 12 ist durch eine Leitung 17 mit der Druckniere 8 verbunden und wird damit durch den von der Flügelzellenpumpe 1 erzeugten Pumpendruck pP beaufschlagt. Die Druckseite (oder auch der Druckbereich) einer Pumpe ist diejenige Seite, zu welcher das Betriebsmedium von der Pumpe gefördert wird und auf welcher ein Druck durch die Pumpe erzeugt wird. Die Gegenseite der Druckseite ist die Saugseite, von welcher das Betriebsmedium von der Pumpe angesaugt wird, bzw. von welcher das Betriebsmedium unter der Wirkung des Umgebungs- oder Atmosphärendrucks zur Pumpe hin bewegt wird, sobald durch die Bewegung der Pumpe ein Volumen expandiert, wodurch der Druck in diesem Raum unter den Umgebungsdruck absinkt.

Der druckseitige Hinterflügeldruckkanal 11 und der saugseitige Hinterflügeldruckkanal 12 sind an ihren beiden Enden jeweils durch eine Drosselstelle 13 bzw. 14 miteinander verbunden. Die Drosselstellen 13 und 14 werden auch als Drosselventile bezeichnet. Die Drosselstellen 13 und 14 sind hydraulische Widerstände, bzw. Verengungen. Diese dienen wie oben beschrieben dazu, dass bei einer Verdrängung des Betriebsmediums, in der Regel Getriebeöl, bei der radialen Einfahrbewegung der Flügel 6 bei deren Bewegung über die Druckniere der druckseitige Hinterflügeldruck pDH ansteigt, da aufgrund der Druckverluste bzw. der Strömungswiderstände in den Drosselstellen 13 und 14 das Öl nicht schnell genug aus dem druckseitigen Hinterflügeldruckkanal 11 in den saugseitigen Hinterflügeldruckkanal 12 verdrängt werden kann. Dies birgt jedoch wie oben beschrieben Nachteile, da durch die Widerstände der Drosselventile 13 und 14 bei einer höheren Drehzahl und damit einer höheren Verdrängungsgeschwindigkeit des Betriebsmediums der druckseitige Hinterflügeldruck pDH über ein sinnvolles Maß ansteigt.

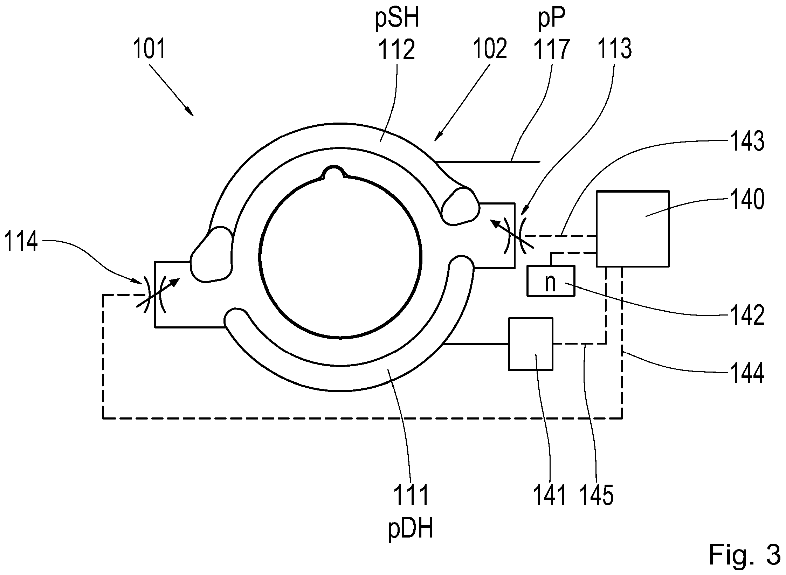

Fig. 3 zeigt eine Ausschnittsvergrößerung einer schematischen axialen Ansicht einer Stirnplatte 102 einer Flügelzellenpumpe 101, bei der nur ein saugseitiger Hinterflügeldruckkanal 112 und ein druckseitiger Hinterflügeldruckkanal 111 dargestellt sind. Zwischen den Enden des druckseitigen Hinterflügeldruckkanals 111 und des saugseitigen Hinterflügeldruckkanals 112 ist jeweils eine Ventileinrich- tung angeordnet, welche als verstellbares Drosselventil 113 bzw. 114 ausgebildet ist. Bei den verstellbaren Drosselventilen 113 und 114 ist es möglich, den hydraulischen Widerstand zu verändern indem beispielsweise die vom druckseitigen Hinterflügeldruckkanal 111 zum saugseitigen Hinterflügeldruckkanal 112 durchströmbare Querschnittsfläche verändert werden kann, oder deren Form so verändert wird, dass sich eine Verlustziffer ändert, welche nach den Gesetzmäßigkeiten der Strömungslehre die bei einer Durchströmung mit einem bestimmten Volumenstrom entstehende Druckdifferenz, d.h. den Druckverlust über die Drossel beeinflusst. Durch die Reduzierung des hydraulischen Widerstandes ist es damit möglich, den druckseitigen Hinterflügeldruck pDH abzusenken. Bauarten für ein solches Drosselventil 113 oder 114 können beispielsweise Nadeldüsen sein. Alternativ könnte die Ventileinrichtung auch als Blende anstatt als Drossel ausgebildet sein. Eine Blende ist im Verhältnis zu deren Durchmesser kürzer als eine Drossel und theoretisch hinsichtlich der Druckverluste viskositätsunabhängig.

Der druckseitige Hinterflügeldruck pDH kann hierzu beispielsweise mit einem Drucksensor 141 gemessen werden, welcher den Messwert durch eine Signalleitung 145 an eine elektronische Getriebesteuerung 140 weitergibt. In der elektronischen Getriebesteuerung 140 wird ein Soll-Ist-Wert-Vergleich durchgeführt und der Widerstand in der Ventileinrichtung 113, bzw. 114 so lange verändert bzw. verringert, bis der Sollwert des druckseitigen Hinterflügeldrucks pDH erreicht ist. Die verstellbaren Drosselventile 113 und 114 werden dabei von der elektronischen Getriebesteuerung 140 durch Signalleitungen 143 und 144 angesteuert. Theoretisch wäre es möglich auch nur eine Ventileinrichtung zwischen den Hinterflügeldruckkanälen vorzusehen, allerdings wäre dann der maximal zur Verfügung stehende Strömungsquerschnitt begrenzt.

Alternativ oder zusätzlich zur Messung des druckseitigen Hinterflügeldrucks pDH kann durch Messung einer Pumpendrehzahl n Aufschluss über die Kraftverhältnisse an den Flügeln bzw. dem Hubring gewonnen werden, da mit zunehmender Drehzahl n die Andruckkräfte steigen und so der druckseitige Hinterflügeldruck pDH abgesenkt werden kann. Ebenso kann anhand einer Betriebstemperatur T_Öl oder einer entsprechenden Bauteiltemperatur erkannt werden, ob sich die Flügelzellenpumpe in einer Kaltstartphase befindet, in welcher ein sicheres Anliegen der Flügelenden am Hubring zum Ansaugen des Betriebsmediums in die Flügelzellenpumpe erforderlich ist. Während dieser Kaltstartphase muss der druckseitige Hinterflügeldruck pDH etwas höher sein als bei einer später erreichten höheren Drehzahl n, und damit größeren Fliehkräften der Flügel auf den Hubring.

Eine Vergrößerung des Strömungsquerschnitts des Drosselventils hat einen großen Effekt auf das Niveau des druckseitigen Hinterflügeldrucks pDH. So wird dieser bei einer Vergrößerung der Drosselquerschnittsfläche um 166% um ca. 50% reduziert. Der maximale Druckunterschied lag in Versuchen bei p=50bar.

Theoretisch kann ab einer bestimmten Drehzahl sowohl der druckseitige als auch der saugseitige Hinterflügeldruckkanal mittels einer Ventileinrichtung zum restlichen Hydrauliksystem hin verschlossen und mit einem drucklosen Bereich verbunden werden.

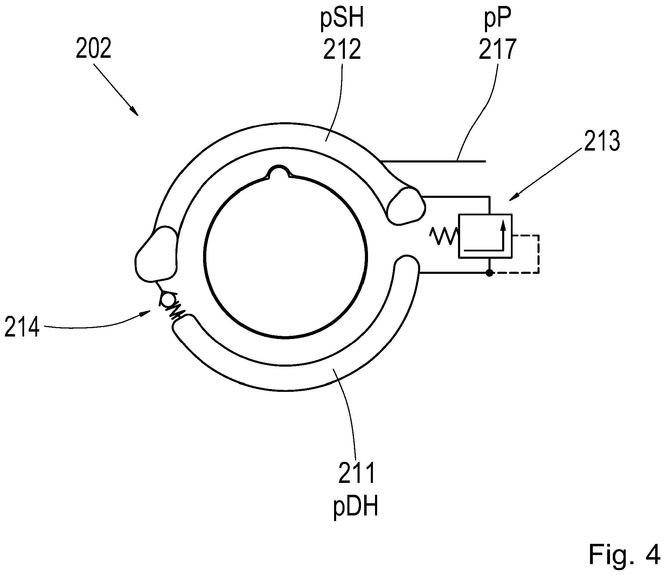

Fig. 4 zeigt eine schematische Ausschnittsvergrößerung einer Stirnplatte 202 als Ausgestaltung einer erfindungsgemäßen Flügelzellenpumpe. Hierbei ist zwi- schen einem druckseitigen Hinterflügeldruckkanal 211 und einem saugseitigen Hinterflügeldruckkanal 212 eine Ventileinrichtung angeordnet, welche als Druckbegrenzungsventil 213 ausgebildet ist. Aus Gründen der vereinfachten Darstellung ist nur ein Druckbegrenzungsventil gezeigt, grundsätzlich kann ein weiteres Druckbegrenzungsventil zwischen den beiden anderen Enden der Hinterflügeldruckkanäle angeordnet sein, was den Strömungsquerschnitt in vorteilhafter Weise erhöhen würde. Das Druckbegrenzungsventil 213 ist hinsichtlich seines Öffnungsdruckes so ausgelegt, dass dieses vom druckseitigen Hinterflügeldruck pDH geöffnet wird, wenn dieser einen zulässigen Wert übersteigt. Der Strömungswiderstand des Druckbegrenzungsventils 213 ist damit dessen Öffnungsdruck. Der druckseitige Hinterflügeldruck pDH ist damit auf einen bestimmten Maximalwert begrenzt. Zusätzlich ist ein Rückschlagventil 214 zwischen dem druckseitigen 211 und dem saugseitigen Hinterflügeldrucckanal 212 derart angeordnet, dass der druckseitige Hinterflügeldruckkanal 211 aus dem saugseitigen Hinterflügeldruckkanal 212 befüllt werden kann. Alternativ hierzu kann auch eine Blende oder eine Drossel anstelle des Rückschlagventils vorgesehen sein, allerdings mit einem schlechteren Effekt hinsichtlich der Funktion.

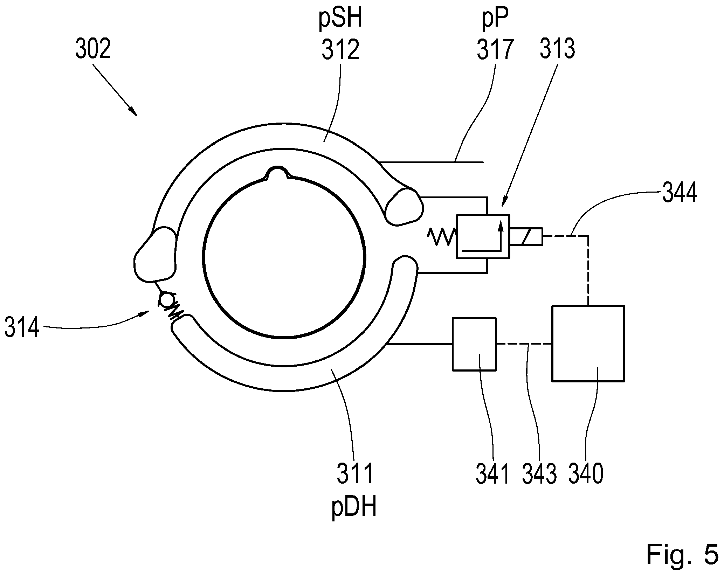

Fig. 5 zeigt in einer schematischen Ausschnittsvergrößerung einer Stirnplatte 302 eine Flügelzellenpumpe. Diese weist einen druckseitigen Hinterflügeldruckkanal 311 und einen saugseitigen Hinterflügeldruckkanal 312 auf, zwischen welchen an mindestens einer Stelle ein elektrisch betätigbares Druckregel- ventil 313 angeordnet ist. Der druckseitige Hinterflügeldruck pDH wird mittels eines Drucksensors 341 gemessen und an durch eine Signalleitung 343 an eine elektroni- sche Getriebesteuerung 340 weitergeleitet. Nach einem Soll-Ist-Wert-Vergleich in der elektronischen Getriebesteuerung 340 wird das Druckregelventil 313 von der elektronischen Getriebesteuerung 340 durch eine Signalleitung 344 angesteuert und so der druckseitige Hinterflügeldruck pDH im druckseitigen Hinterflügeldruckkanal 311 auf den gewünschten Wert eingestellt. Zusätzlich ist ein Rückschlagventil 314 zwischen dem druckseitigen 311 und dem saugseitigen Hinterflügeldruckkanal 312 derart angeordnet, dass der druckseitige Hinterflügeldruckkanal 311 aus dem saugseitigen Hinterflügeldruckkanal 312 befüllt werden kann. Die Gegenrichtung ist gesperrt. Alternativ hierzu kann auch eine Blende oder eine Drossel anstelle des Rückschlagventils vorgesehen sein, allerdings mit einem schlechteren Effekt hinsichtlich der Funktion.

Grundsätzlich können die Ventileinrichtungen auf der Seite nur einer Axialplatte oder beiden Axialplatten angeordnet sein, aus Gründen der Kosten und des Bauraumes ist jedoch nur eine einseitige Ausgestaltung zu bevorzugen, so lange die realisierbaren Strömungsquerschnitte ausreichend sind.

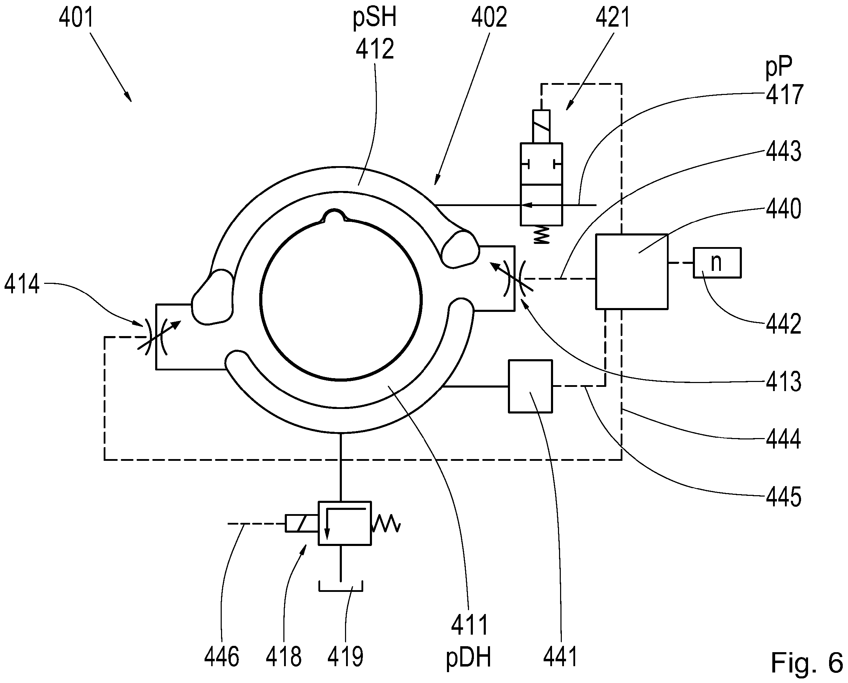

Fig. 6 zeigt eine Ausschnittsvergrößerung einer Stirnplatte 402 einer Flügelzellenpumpe 401, welche in ihrem Grundauf- bau der Ausgestaltung aus Fig. 3 entspricht. Zusätzlich weist die Flügelzellenpumpe 401 ein als Entlüftungsventil wirksames elektrisch betätigbares Druckregelventil 418 auf, durch welches der druckseitige Hinterflügeldruck pDH bis auf theoretisch Umge- bungsdruck abgesenkt werden kann, in dem der druckseitige Hinterflügeldruckkanal 411 mit einem drucklosen Bereich 419 verbunden wird. Im Zustrom zum saugseitigen Hinterflügeldruckkanal 412 ist ein als Wegeventil ausgebildetes Absperrventil 421 angeordnet mittels welchem dieser von der Druckseite 417 der Flügelzellenpumpe 401 getrennt werden kann. Der druckseitige Hinterflügeldruck pDH wird mittels eines Drucksensors 441 gemessen, welcher durch eine Signalleitung 445 an eine elektronische Getriebesteuerung 440 weitergeleitet wird. Die elektronische Getriebesteuerung 440 steuert auch durch Signalleitungen 443 und 444 die verstellbaren Drosselventile 413 und 414 zwischen dem druckseitigen 411 und saugseitigen Hinterflügeldruckkanal 412 an. Die Drehzahl n der Flügelzellenpumpe 401, welche beispielsweise von einem Drehzahlsensor 442 gemessen werden kann, wird in der elektronischen Getriebesteuerung 440 erfasst. Ebenso kann die Betriebstemperatur T_Öl mit einem Sensor gemessen werden.

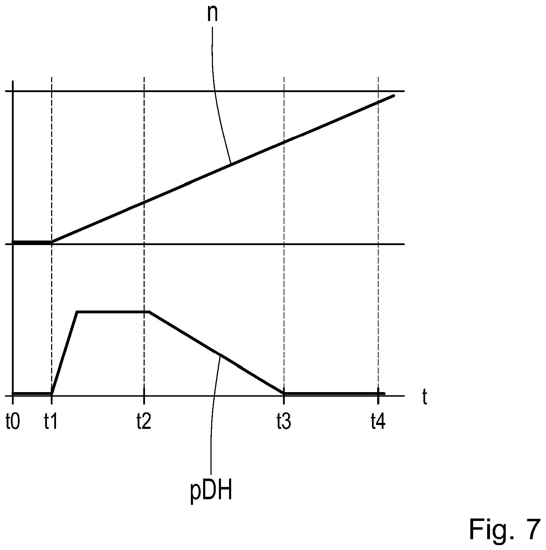

Der Zweck dieser zu der Ausgestaltung aus Fig. 3 zusätzlichen Bauteile wird aus dem Verfahren ersichtlich, welches anhand eines Zeitdiagramms in Fig. 7 dargestellt ist: In einem unteren Drehzahlbereich, welcher im zeitlichen Verlauf ab einem Zeitpunkt t1 beginnt, ist das Absperrventil 421 geöffnet und das Druckregelventil 418 geschlossen. Das System funktioniert wie unter Fig. 3 beschrieben, damit der druckseitige Hinterflügeldruck pDH beim Anfahren ausreichend hoch ist. Dieser kann beispielsweise wie bis zu einem Zeitpunkt t2 dargestellt konstant gehalten werden. Mit steigender Drehzahl n, welche von einem Drehzahlsensor 442 erfasst wird, wird mittels der Verringerung der Strömungswiderstände der verstellbaren Drosselventile 413 und 414 der druckseitige Hinterflügeldruck pDH ab einem Zeitpunkt t2 abgesenkt, da durch die zunehmende Fliehkraft auf die Flügel die Summe aus Fliehkraft und der Kraft des druckseitigen Hinterflügeldrucks pDH die Flügelenden ausreichend stark an den Hubring drückt. Ab einem Zeitpunkt t3 ist die Drehzahl n so hoch, dass die Fliehkräfte alleine ausreichen um die Flügelenden sicher an den Hubring zu drücken.

Das Druckregelventil 418 ist hierbei vollständig geöffnet ist, wodurch der druckseitige Hinterflügeldruckkanal 411 mit einem drucklosen Bereich 419 verbunden ist, so dass der druckseitige Hinterflügeldruck pDH dem Umgebungsdruck entspricht, d.h. praktisch drucklos ist. Die Drosselventile 413 und 414 sind hierbei vollständig geöffnet, wodurch auch der saugseitige Hinterflügeldruckkanal 412 mit dem drucklosen Bereich 419 verbunden und der druckseitige Hinterflügeldruck pSH auch drucklos ist. Das Absperrventil 421 wird ab dem Zeitpunkt t3 geschlossen, um eine Druckbeaufschlagung des saugseitigen Hinterflügeldruckkanals 412 durch den Pumpendruck pP zu verhindern. Alternativ kann das Absperrventil 421 auch als Druckregelventil ausgebildet sein.

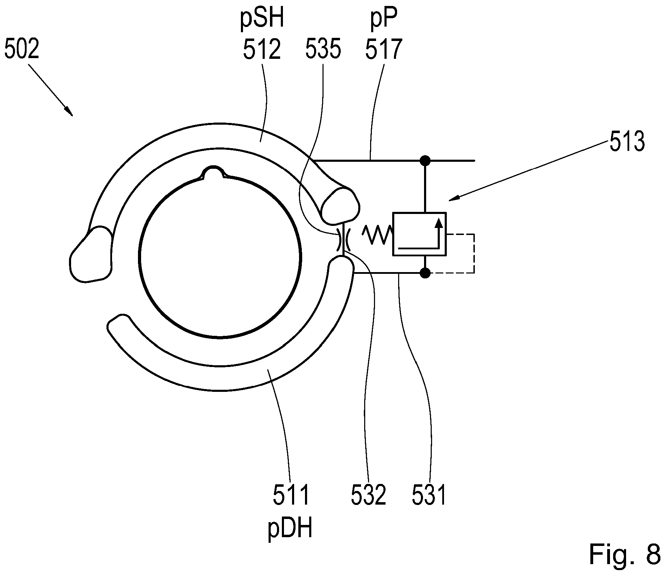

Fig. 8 zeigt eine Ausschnittsvergrößerung einer schematischen axialen Ansicht einer Stirnplatte 502 einer erfindungsgemäßen Flügelzellenpumpe 501. In der Stirnplatte 502 sind ein druckseitiger Hinterflügeldruckkanal 511 und ein saugseitiger Hinterflügeldruckkanal 512 ausgebildet, welche hydraulisch durch eine Leitung 532 miteinander verbunden sind. Parallel hierzu ist der druckseitige Hinterflügeldruckkanal 511 durch eine Leitung 531 und einem darin angeordneten Druckbegrenzungsventil 513 mit einer Druckleitung 517 verbunden, aus welcher der saugseitige Hinterflügeldruckkanal 512 mit dem von der Flügelzellenpumpe erzeugten Druck pP aus der nicht dargestellten Druckniere oder einer Stelle der Druckseite der Flügelzellenpumpe beaufschlagt wird. Hierdurch stellt sich im saugseitigen Hinterflügeldruckkanal 512 ein saugseitiger Hinterflügeldruck pSH ein, welcher im Wesentlichen dem von der Flügelzellenpumpe erzeugten Druck entspricht, welcher eventuell geringförmig um mögliche Strömungsverluste reduziert ist.

Unter einer Leitung kann jede geometrische Gestaltung verstanden werden, in welcher eine Flüssigkeit von einem Ort zu einem anderen Ort geleitet werden kann. Eine Leitung kann als eine Rohrleitung, eine Ausnehmung wie eine Vertiefung im Material der Stirnplatte, als Bohrung oder eine Anordnung mehrerer Bohrungen, als gusstechnisch gestalteter Kanal oder als eine Kombination aus den genannten Möglichkeiten einer Leitung ausgebildet sein.

Das Druckbegrenzungsventil 513 ist dabei derart angeordnet, dass dieses von dem druckseitigen Hinterflügeldruckkanal 511 her zur Druckleitung 517 hin durchströmbar ist, wenn der druckseitige Hinterflügeldruck pDH im druckseitigen Hinterflügeldrucckanal 511 einen bestimmten Wert überschreitet. Als Alternative zum Druckbegrenzungsventil 513 kann auch ein Rückschlagventil an dessen Stelle angeordnet sein, wobei das Rückschlagventil die gleiche Durchströmungsrichtung aufweist wie das Druckbegrenzungsventil 513.

Die Leitung 532 weist einen bestimmten hydraulischen Widerstand auf. Dieser hydraulische Widerstand kann in Form einer Blende oder, wie im Ausführungsbeispiel dargestellt, einer Drossel 535 ausgebildet sein. Steigt nun im Betrieb der Flügelzellenpumpe die Drehzahl an oder erhöht sich bei tiefen Temperaturen die Viskosität des Betriebsmediums, steigt der druckseitige Hinterflügeldruck pDH übermäßig an. Ab einem maximal zulässigen Druckwert öffnet das Druckbegrenzungsventil 513 zur Druckleitung 517 und begrenzt somit den druckseitigen Hinterflügeldruck pDH. Der Anstieg des druckseitigen Hinterflügeldrucks pDH im Betrieb wird unter anderem von dem hydraulischen Widerstand in der Leitung 531 bestimmt. Dieser hydraulische Widerstand ist so gewählt, dass zum einen bei geringen Drehzahlen eine Druckbeaufschlagung des druckseitigen Hinterflügeldruckkanals 511 aus dem saugseitigen Hinterflügeldruckkanal 512 möglich ist, welcher wiederum aus der Druckleitung 517 versorgt wird. Zum anderen wird durch den hydraulischen Widerstand ein bestimmter unterer Wert des druckseitigen Hinterflügeldrucks pDH eingestellt, welcher für einen guten volumetrischen Wirkungsgrad der Flügelzellenpumpe erforderlich ist.

Alternativ hierzu wäre es auch möglich, den druckseitigen Hinterflügeldruckkanal durch das Druckbegrenzungsventil mit einer Saugleitung der Flügelzellenpumpe zu verbinden, so dass das Druckbegrenzungsventil zu einem geringeren Druckniveau hin als bei der Druckleitung öffnet, wodurch sich der druckseitige Hinterflügeldruck weiter reduzieren lässt.

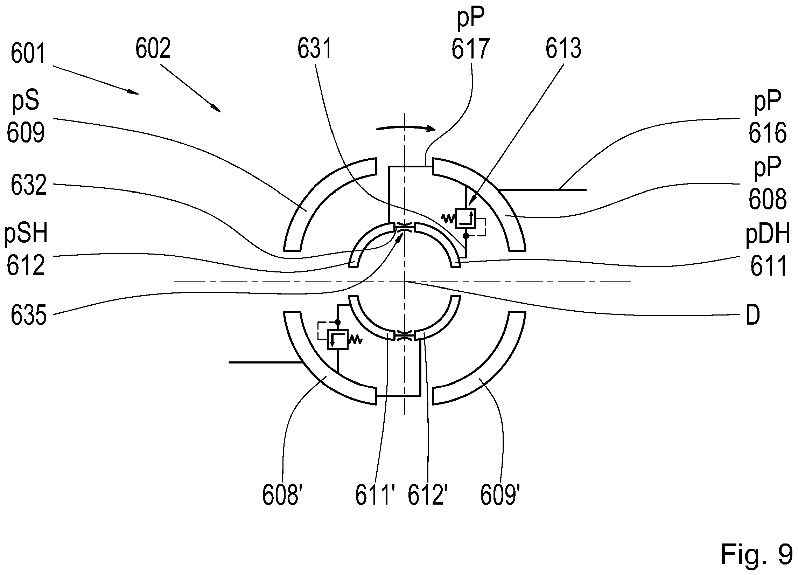

Grundsätzlich können die Ausgestaltungen der erfindungsgemäßen Lösung sowohl bei einer einhubigen als auch bei einer mehrhubigen Flügelzellenpumpe Anwendung finden. So zeigt Fig. 9 eine schematische axiale Ansicht einer Stirnplatte 602 einer doppelhubigen Flügelzellenpumpe 601. Diese weist wie oben beschrieben zwei Förderbereiche auf. Die Förderbereiche weisen wiederum jeder für sich einen Saugbereich und einen Druckbereich auf. In einem ersten Förderbereich sind die Saugniere 609 und die Druckniere 608 sowie ein saugseitiger Hinterflügeldruckbereich 611 und ein druckseitiger Hinterflügeldruckkanal 612 ausgebildet. In einem zweiten Förderbereich sind die Saugniere 609' und die Druckniere 608' sowie ein saugseitiger Hinterflügeldruckkanal 611' und ein druckseitiger Hinterflügeldruckkanal 612` ausgebildet.

Die doppelhubige Flügelzellenpumpe 601 ist im gezeigten Ausführungsbeispiel symmetrisch aufgebaut, kann aber auch asymmetrisch ausgebildet sein. In der oberen Hälfte der Zeichnung (oberhalb der waagerechten strickpunktierten Linie) ist ein erster autarker Förderbereich und in der unteren Hälfte ein zweiter autarker Förderbereich dargestellt. Unter autarken Förderbereichen ist zu verstehen, dass innerhalb der doppelhubigen Flügelzellenpumpe prinzipiell zwei Pumpen ausgebildet sind. Die beiden Förderbereiche beeinflussen sich nicht gegenseitig. Mit Ausnahme von Leckageströmen sind die Ölkreisläufe beider Förderbereiche getrennt. Die von den beiden Förderbereichen erzeugten Drücke können unterschiedlich hoch sein. Ebenso können sich bei asymmetrischer Ausbildung der doppelhubigen Flügelzellenpumpe die jeweiligen Volumenströme unterscheiden. Aus Gründen einer übersichtlichen Darstellung wird hier im Wesentlichen nur die obere Hälfte der Stirnplatte 602 beschrieben. Die Drehrichtung eines nicht gezeigten Rotors um eine Drehachse D ist auf der Zeichnung im Uhrzeigersinn, dargestellt durch den Drehrichtungspfeil R.

Der Saugbereich umfasst die Saugniere 609 und einen saugseitigen Hinterflügeldruckkanal 612 auf, welcher radial zwischen der Saugniere 609 und der Drehachse D angeordnet ist. In der Saugniere herrscht der Saugdruck pS und in dem saugseitigen Hinterflügeldruckkanal 612 der saugseitige Hinterflügeldruck pSH.

Radial innerhalb der Druckniere 608, in welcher ein Pumpendruck pP herrscht, ist ein druckseitiger Hinterflügeldruckkanal 611 ausgebildet, in welchem der druckseitige Hinterflügeldruck pDH herrscht. Analog zu der Flügelzellenpumpe in Fig. 8 führt eine Leitung 631 aus dem druckseitigen Hinterflügeldruckkanal 611 zu der Druckniere 608. In der Leitung 631, also zwischen dem druckseitigen Hinterflügeldruckkanal 611 und der Druckniere 608 ist ein Druckbegrenzungsventil 613 angeordnet, welches so ausgebildet und angeordnet ist, dass dieses nur von dem druckseitigen Hinterflügeldruckkanal 611 her bei Überschreitung eines bestimmten Wertes des druckseitigen Hinterflügeldrucks pDH durchströmbar ist. Alternativ hierzu könnte das Druckbegrenzungsventil 613 auch zwischen dem druckseitigen Hinterflügeldruckkanal 611 und der Druckleitung 616 oder 617 angeordnet sein, d.h. jedem Bereich der Druckseite der Flügelzellenpumpe 601. Theoretisch wäre auch eine Anordnung des Druckbegrenzungsventils 613 zwischen dem druckseitigen Hinterflügeldruckkanal 611 und dem Saugbereich der Flügelzellenpumpe 601, wie beispielsweise der Saugniere 609 oder einem drucklosen Bereich des Automatikgetriebes möglich.

Der saugseitige Hinterflügeldruckbereich 612 ist hydraulisch mit der Druckniere 608 verbunden, im gezeigten Beispiel durch eine Druckleitung 617, so dass der saugseitige Hinterflügeldruckbereich mit Betriebsmedium versorgt wird, welches unter Pumpendruck pP steht. Der saugseitige Hinterflügeldruckbereich 612 und der druckseitige Hinterflügeldruckkanal 611 sind durch einen hydraulischen Widerstand 635 verbunden, welcher in einer Leitung 632 ausgebildet ist. Der hydraulische Widerstand kann wie bei der Flügelzellenpumpe 501 in Fig. 8 als Drossel oder Blende ausgebildet sein und ist von seiner Größe so gewählt wie unter Fig. 8 beschrieben ist.

Bei einer doppel- oder mehrhubigen Flügelzellenpumpe könnten theoretisch die druckseitigen Hinterflügeldruckkanäle hydraulisch miteinander verbunden sein, so dass für zwei oder mehrere Förderbereiche der Flügelzellenpumpe nur ein Druckbegrenzungsventil erforderlich wäre. Ebenso wäre eine hydraulische Verbindung der saugseitigen Hinterflügeldruckkanäle möglich, was den Aufbau und die Herstellung weiter vereinfachen würde.

### Bezugszeichen

- 1: Flügelzellenpumpe
- 2: Stirnplatte, erste Axialplatte
- 3: Deckelplatte, zweite Axialplatte
- 4: Pumpenwelle
- 5: Rotor
- 6: Flügel
- 7: Hubring
- 8: Druckniere
- 9: Saugniere
- 10: Gehäuse
- 11: druckseitiger Hinterflügeldruckkanal
- 12: saugseitiger Hinterflügeldruckkanal
- 13: Drosselstelle
- 14: Drosselstelle
- 16: Druckleitung, Druckseite der Flügelzellenpumpe
- 17: Druckleitung
- 101: Flügelzellenpumpe
- 102: Stirnplatte, erste Axialplatte
- 111: druckseitiger Hinterflügeldruckkanal
- 112: saugseitiger Hinterflügeldruckkanal
- 113: Verstelldrossel
- 114: Verstelldrossel
- 116: Druckleitung, Druckseite der Flügelzellenpumpe
- 117: Druckleitung
- 140: elektronische Getriebesteuerung
- 141: Drucksensor
- 142: Drehzahlsensor
- 143: Signalleitung
- 144: Signalleitung
- 145: Signalleitung
- 202: Stirnplatte, erste Axialplatte
- 211: druckseitiger Hinterflügeldruckkanal
- 212: saugseitiger Hinterflügeldruckkanal
- 213: Druckbegrenzungsventil
- 214: Rückschlagventil
- 217: Druckleitung
- 302: Stirnplatte, erste Axialplatte
- 311: druckseitiger Hinterflügeldruckkanal
- 312: saugseitiger Hinterflügeldruckkanal
- 313: Druckregelventil
- 314: Rückschlagventil
- 317: Druckleitung
- 340: elektronische Getriebesteuerung
- 341: Drucksensor
- 343: Signalleitung
- 344: Signalleitung
- 401: Flügelzellenpumpe
- 402: Stirnplatte, erste Axialplatte
- 411: druckseitiger Hinterflügeldruckkanal
- 412: saugseitiger Hinterflügeldruckkanal
- 413: Verstelldrossel
- 414: Verstelldrossel
- 417: Druckleitung
- 418: Druckregelventil
- 419: druckloser Bereich, Entlüftung
- 421: Absperrventil
- 440: elektronische Getriebesteuerung
- 441: Drucksensor
- 442: Drehzahlsensor
- 443: Signalleitung
- 444: Signalleitung
- 445: Signalleitung
- 446: Signalleitung
- 502: Stirnplatte, erste Axialplatte
- 511: druckseitiger Hinterflügeldruckkanal
- 512: saugseitiger Hinterflügeldruckkanal
- 513: Druckbegrenzungsventil
- 517: Druckleitung
- 531: Leitung
- 532: Leitung
- 535: hydraulischer Widerstand, Drossel
- 601: Flügelzellenpumpe
- 602: Stirnplatte, erste Axialplatte
- 608: Druckniere
- 608': Druckniere des zweiten Förderbereiches
- 609: Saugniere
- 609': Saugniere des zweiten Förderbereiches
- 611: druckseitiger Hinterflügeldruckkanal
- 611': druckseitiger Hinterflügeldruckkanal
- 612: saugseitiger Hinterflügeldruckkanal
- 612': saugseitiger Hinterflügeldruckkanal
- 613: Druckbegrenzungsventil
- 616: Druckleitung
- 617: Druckleitung
- 631: Leitung
- 632: Leitung
- 635: hydraulischer Widerstand, Drossel

- D: Drehachse
- n: Drehzahl der Flügelzellenpumpe
- pDH: druckseitiger Hinterflügeldruck
- pSH: saugseitiger Hinterflügeldruck
- pP: Pumpendruck
- pS: Saugdruck
- R: Drehrichtung
- T_Öl: Temperatur des Betriebsmediums
- t: Zeit
- t_1: Zeitpunkt
- t_2: Zeitpunkt
- t_3: Zeitpunkt
- t_4: Zeitpunkt

## Patentansprüche

1. Flügelzellenpumpe (101) für ein Automatikgetriebe, mit einem saugseitigen Hinterflügeldruckkanal (112) und einem druckseitigen Hinterflügeldruckkanal (111), wobei der saugseitige Hinterflügeldruckkanal (112) mit der Druckseite (16) der Flügelzellenpumpe (101) verbunden ist, wobei die Flügelzellenpumpe (101) eine Ventileinrichtung (213,513) aufweist, mit welcher der druckseitige Hinterflügeldruckkanal (111) verbunden ist, wobei die Ventileinrichtung (213,513) zwischen dem druckseitigen (211,511) und dem saugseitigen Hinterflügeldruckkanal (212,512) angeordnet ist, **dadurch gekennzeichnet, dass** die Ventileinrichtung als Druckbegrenzungsventil (213,513) ausgebildet ist, wobei das Druckbegrenzungsventil (213,513) so angeordnet ist, dass dieses von dem druckseitigen Hinterflügeldruckkanal (211,511) zum saugseitigen Hinterflügeldruckkanal (212,512) durchströmbar ist, so dass im Betrieb der Flügelzellenpumpe die Höhe eines druckseitigen Hinterflügeldrucks (pDH) im druckseitigen Hinterflügeldruckkanal (211,511) mittels der Ventileinrichtung (213,513) einstellbar ist.

2. Flügelzellenpumpe nach Anspruch 1, **dadurch gekennzeichnet, dass** die Ventileinrichtung (213,513) einen veränderbaren hydraulischen Widerstand aufweist.

3. Flügelzellenpumpe nach Anspruch 1, **dadurch gekennzeichnet, dass** die Ventileinrichtung (213,513) einen konstanten hydraulischen Widerstand aufweist.

4. Flügelzellenpumpe nach Anspruch 2 oder 3, **dadurch gekennzeichnet, dass** zwischen dem druckseitigen Hinterflügeldruckkanal (211,511) und dem saugseitigen Hinterflügeldruckkanal (212,512) ein Rückschlagventil (214) angeordnet ist, welches nur vom saugseitigen (212,512) zum druckseitigen Hinterflügeldruckkanal (211) durchströmbar ist.

5. Flügelzellenpumpe nach einem der Ansprüche 1 bis 4 , **dadurch gekennzeichnet, dass** der hydraulische Widerstand der Ventileinrichtung (213,513) mittels einer elektronischen Getriebesteuerung (140) verstellbar ist.

6. Flügelzellenpumpe nach Anspruch 5, **dadurch gekennzeichnet, dass** diese eine Sensoreinrichtung (141) aufweist, welche den druckseitigen Hinterflügeldruck (pDH) erfasst.

7. Flügelzellenpumpe nach Anspruch 6, **dadurch gekennzeichnet, dass** die Veränderung des druckseitigen Hinterflügeldrucks (pDH) in Abhängigkeit unterschiedlicher Betriebsparameter erfolgt, welche in der elektronischen Getriebesteuerung (140) erfasst werden.

8. Flügelzellenpumpe nach Anspruch 7, **dadurch gekennzeichnet, dass** die erfassten Betriebsparameter eine Temperatur (T_Öl) und/oder eine Drehzahl (n) der Flügelzellenpumpe sind.

9. Flügelzellenpumpe nach einem der Ansprüche 1 bis 8, **dadurch gekennzeichnet, dass** die Ventileinrichtung zusätzlich zu dem Druckbegrenzungsventil (513) einen hydraulischen Widerstand (535) umfasst, und dass der druckseitige Hinterflügeldruckkanal (511) und der saugseitige Hinterflügeldruckkanal (512) hydraulisch miteinander verbunden sind, wobei zwischen dem druckseitigen Hinterflügeldruckkanal (511) und dem saugseitigen Hinterflügeldruckkanal (512) der hydraulische Widerstand (535) ausgebildet ist, und dass das Druckbegrenzungsventil (513) zwischen dem druckseitigen Hinterflügeldruckkanal (511) und einem Bereich der Druckseite der Flügelzellenpumpe (501) oder einem Bereich der Saugseite der Flügelzellenpumpe (501) oder einem drucklosen Bereich des Automatikgetriebes angeordnet ist, wobei das Druckbegrenzungsventil (513) vom druckseitigen Hinterflügeldruckkanal (511) her durchströmbar ist, so dass der druckseitige Hinterflügeldruck (pDH) mittels des Druckbegrenzungsventils (513) begrenzbar ist.

10. Flügelzellenpumpe nach Anspruch 9, **dadurch gekennzeichnet, dass** der hydraulische Widerstand als Drossel (535) oder als Blende ausgebildet ist.

11. Flügelzellenpumpe nach einem der Ansprüche 1 bis 10, **dadurch gekennzeichnet, dass** die Flügelzellenpumpe (601) mindestens zweihubig ausgebildet ist und mindestens zwei druckseitige Hinterflügeldruckkanäle (611, 611') und mindestens zwei saugseitige Hinterflügeldruckkanäle (612, 612') aufweist.

12. Automatikgetriebe für ein Kraftfahrzeug, mit einer Flügelzellenpumpe nach einem der Ansprüche 1 bis 11.

13. Verfahren zum Betreiben einer Flügelzellenpumpe nach einem der Ansprüche 5 bis 11, **dadurch gekennzeichnet, dass** zumindest die Drehzahl (n) der Flügelzellenpumpe in der elektronischen Getriebesteuerung erfasst wird und dass bei einem Start der Flügelzellenpumpe der Widerstand der Ventileinrichtung zunächst so erhöht wird, so dass der druckseitige Hinterflügeldruck (pDH) über einen bestimmten Druckwert ansteigt, welcher ausreichend hoch gewählt ist um die Flügelenden an einen Hubring zu drücken, und wobei bei steigender Drehzahl (n) der druckseitige Hinterflügeldruck (pDH) mittels der Ventileinrichtung reduziert wird.

14. Verfahren zum Betreiben einer Flügelzellenpumpe nach einem der Ansprüche 5 bis 11, **dadurch gekennzeichnet, dass** zumindest die Drehzahl (n) der Flügelzellenpumpe und eine Betriebstemperatur der Flügelzellenpumpe in der elektronischen Getriebesteuerung erfasst werden und dass bei einem Start der Flügelzellenpumpe bei einer Betriebstemperatur unterhalb einer bestimmten Temperatur (T_Öl) der Widerstand der Ventileinrichtung zunächst so erhöht wird, dass der druckseitige Hinterflügeldruck (pDH) über einen bestimmten Druckwert ansteigt, welcher ausreichend hoch gewählt ist um die Flügelenden an einen Hubring zu drücken, und wobei bei steigender Drehzahl (n) der druckseitige Hinterflügeldruck mittels der Ventileinrichtung reduziert wird.

## Claims

1. Vane pump (101) for an automatic transmission, comprising a suction-side trailing vane pressure duct (112) and a pressure-side trailing vane pressure duct (111), wherein the suction-side trailing vane pressure duct (112) is connected to the pressure side (16) of the vane pump (101), wherein the vane pump (101) comprises a valve device (213, 513) to which the pressure-side trailing vane pressure duct (111) is connected,
wherein the valve device (213, 513) is arranged between the pressure-side trailing vane pressure duct (211, 511) and the suction-side trailing vane pressure duct (212, 512), **characterized in that** the valve device is in the form of a pressure-limiting valve (213, 513), wherein the pressure-limiting valve (213, 513) is arranged such that it is able to be flowed through from the pressure-side trailing vane pressure duct (211, 511) to the suction-side trailing vane pressure duct (212, 512), such that the level of a pressure-side trailing vane pressure (pDH) in the pressure-side trailing vane pressure duct (211, 511) is settable by means of the valve device (213, 513) during operation of the vane pump.

2. Vane pump according to Claim 1, **characterized in that** the valve device (213, 513) has a variable hydraulic resistance.

3. Vane pump according to Claim 1, **characterized in that** the valve device (213, 513) has a constant hydraulic resistance.

4. Vane pump according to Claim 2 or 3, **characterized in that** a check valve (214) is arranged between the pressure-side trailing vane pressure duct (211, 511) and the suction-side trailing vane pressure duct (212, 512) and is only able to be flowed through from the suction-side trailing vane pressure duct (212, 512) to the pressure-side trailing vane pressure duct (211).

5. Vane pump according to one of Claims 1 to 4, **characterized in that** the hydraulic resistance of the valve device (213, 513) is adjustable by means of an electronic transmission controller (140).

6. Vane pump according to Claim 5, **characterized in that** it comprises a sensor device (141) which measures the pressure-side trailing vane pressure (pDH).

7. Vane pump according to Claim 6, **characterized in that** the pressure-side trailing vane pressure (pDH) is changed depending on different operating parameters recorded in the electronic transmission controller (140).

8. Vane pump according to Claim 7, **characterized in that** the recorded operating parameters are a temperature (T_Oil) and/or a rotational speed (n) of the vane pump.

9. Vane pump according to one of Claims 1 to 8, **characterized in that** the valve device comprises, in addition to the pressure-limiting valve (513), a hydraulic resistor (535), and **in that** the pressure-side trailing vane pressure duct (511) and the suction-side trailing vane pressure duct (512) are hydraulically connected to one another, wherein the hydraulic resistor (535) is formed between the pressure-side trailing vane pressure duct (511) and the suction-side trailing vane pressure duct (512), and **in that** the pressure-limiting valve (513) is arranged between the pressure-side trailing vane pressure duct (511) and a region of the pressure side of the vane pump (501) or a region of the suction side of the vane pump (501) or a pressureless region of the automatic transmission, wherein the pressure-limiting valve (513) is able to be flowed through from the pressure-side trailing vane pressure duct (511), such that the pressure-side trailing vane pressure (pDH) is able to be limited by means of the pressure-limiting valve (513).

10. Vane pump according to Claim 9, **characterized in that** the hydraulic resistor is in the form of a throttle (535) or in the form of an orifice plate.

11. Vane pump according to one of Claims 1 to 10, **characterized in that** the vane pump (601) is of at least double-stroke design and comprises at least two pressure-side trailing vane pressure ducts (611, 611') and at least two suction-side trailing vane pressure ducts (612, 612') .

12. Automatic transmission for a motor vehicle, comprising a vane pump according to one of Claims 1 to 11.

13. Method for operating a vane pump according to one of Claims 5 to 11, **characterized in that** at least the rotational speed (n) of the vane pump is recorded in the electronic transmission controller, and **in that**, when starting the vane pump, the resistance of the valve device is initially increased such that the pressure-side trailing vane pressure (pDH) rises above a determined pressure value which is selected to be high enough to push the vane ends against a stroke ring, and wherein, with increasing rotational speed (n), the pressure-side trailing vane pressure (pDH) is reduced by means of the valve device.

14. Method for operating a vane pump according to one of Claims 5 to 11, **characterized in that** at least the rotational speed (n) of the vane pump and an operating temperature of the vane pump are recorded in the electronic transmission controller, and **in that**, when starting the vane pump at an operating temperature below a determined temperature (T_Oil), the resistance of the valve device is initially increased such that the pressure-side trailing vane pressure (pDH) rises above a determined pressure value which is selected to be high enough to push the vane ends against a stroke ring, and wherein, with increasing rotational speed (n), the pressure-side trailing vane pressure is reduced by means of the valve device.

## Revendications

1. Pompe à palettes (101) pour une transmission automatique, avec un canal de pression à palettes arrière côté aspiration (112) et un canal de pression à palettes arrière côté refoulement (111), le canal de pression à palettes arrière côté aspiration (112) étant relié au côté refoulement (16) de la pompe à palettes (101), la pompe à palettes (101) présentant un dispositif de soupape (213, 513) auquel est relié le canal de pression à palettes arrière côté refoulement (111),
le dispositif de soupape (213, 513) étant agencé entre le canal de pression à palettes arrière côté refoulement (211, 511) et le canal de pression à palettes arrière côté aspiration (212, 512), **caractérisé en ce que** le dispositif de soupape est réalisé sous forme de soupape de limitation de pression (213, 513), la soupape de limitation de pression (213, 513) étant agencée de telle sorte que celle-ci peut être traversée du canal de pression à palettes arrière côté refoulement (211, 511) vers le canal de pression à palettes arrière côté aspiration (212, 512), de telle sorte que, pendant l'exploitation de la pompe à palettes, la hauteur d'une pression à palettes arrière côté refoulement (pDH) dans le canal de pression à palettes arrière côté refoulement (211, 511) peut être réglée au moyen du dispositif de soupape (213, 513).

2. Pompe à palettes selon la revendication 1, **caractérisée en ce que** le dispositif de soupape (213, 513) présente une résistance hydraulique variable.

3. Pompe à palettes selon la revendication 1, **caractérisée en ce que** le dispositif de soupape (213, 513) présente une résistance hydraulique constante.

4. Pompe à palettes selon la revendication 2 ou 3, **caractérisée en ce qu'**entre le canal de pression à palettes arrière côté refoulement (211, 511) et le canal de pression à palettes arrière côté aspiration (212, 512) est agencé une soupape anti-retour (214) qui ne peut être traversée que du canal de pression à palettes arrière côté aspiration (212, 512) vers le canal de pression à palettes arrière côté refoulement (211).

5. Pompe à palettes selon l'une quelconque des revendications 1 à 4, **caractérisée en ce que** la résistance hydraulique du dispositif de soupape (213, 513) est réglable au moyen d'une commande de transmission électronique (140).

6. Pompe à palettes selon la revendication 5, **caractérisée en ce que** celle-ci présente un dispositif de capteur (141) qui détecte la pression à palettes arrière côté refoulement (pDH).

7. Pompe à palettes selon la revendication 6, **caractérisée en ce que** la modification de la pression à palettes arrière côté refoulement (pDH) s'effectue en fonction de différents paramètres d'exploitation qui sont détectés dans la commande de transmission électronique (140) .

8. Pompe à palettes selon la revendication 7, **caractérisée en ce que** les paramètres d'exploitation détectés sont une température (T_huile) et/ou une vitesse de rotation (n) de la pompe à palettes.

9. Pompe à palettes selon l'une quelconque des revendications 1 à 8, **caractérisée en ce que** le dispositif de soupape comprend, en plus de la soupape de limitation de pression (513), une résistance hydraulique (535), et **en ce que** le canal de pression à palettes arrière côté refoulement (511) et le canal de pression à palettes arrière côté aspiration (512) sont reliés hydrauliquement l'un à l'autre, la résistance hydraulique (535) étant réalisée entre le canal de pression à palettes arrière côté refoulement (511) et le canal de pression à palettes arrière côté aspiration (512), et **en ce que** la soupape de limitation de pression (513) est agencée entre le canal de pression à palettes arrière côté refoulement (511) et une zone du côté refoulement de la pompe à palettes (501) ou une zone du côté aspiration de la pompe à palettes (501) ou une zone sans pression de la transmission automatique, la soupape de limitation de pression (513) pouvant être traversée depuis le canal de pression à palettes arrière côté refoulement (511), de telle sorte que la pression à palettes arrière côté refoulement (pDH) peut être limitée au moyen de la soupape de limitation de pression (513).

10. Pompe à palettes selon la revendication 9, **caractérisée en ce que** la résistance hydraulique est réalisée sous forme d'étranglement (535) ou sous forme de diaphragme.

11. Pompe à palettes selon l'une quelconque des revendications 1 à 10, **caractérisée en ce que** la pompe à palettes (601) est réalisée avec au moins deux courses et présente au moins deux canaux de pression à palettes arrière côté refoulement (611, 611') et au moins deux canaux de pression à palettes arrière côté aspiration (612, 612').

12. Transmission automatique pour véhicule automobile, avec une pompe à palettes selon l'une quelconque des revendications 1 à 11.

13. Procédé d'exploitation d'une pompe à palettes selon l'une quelconque des revendications 5 à 11, **caractérisé en ce qu'**au moins la vitesse de rotation (n) de la pompe à palettes est détectée dans la commande de transmission électronique et **en ce que**, lors d'un démarrage de la pompe à palettes, la résistance du dispositif de soupape est tout d'abord augmentée de telle sorte que la pression à palettes arrière côté refoulement (pDH) augmente au-delà d'une valeur de pression déterminée qui est choisie suffisamment élevée pour presser les extrémités des palettes contre un anneau de course et, lorsque la vitesse de rotation (n) augmente, la pression à palettes arrière côté refoulement (pDH) est réduite au moyen du dispositif de soupape.

14. Procédé d'exploitation d'une pompe à palettes selon l'une quelconque des revendications 5 à 11, **caractérisé en ce qu'**au moins la vitesse de rotation (n) de la pompe à palettes et une température d'exploitation de la pompe à palettes sont détectées dans la commande de transmission électronique et **en ce que**, lors d'un démarrage de la pompe à palettes à une température d'exploitation inférieure à une température déterminée (T_huile), la résistance du dispositif de soupape est d'abord augmentée de telle sorte que la pression à palettes arrière côté refoulement (pDH) augmente au-delà d'une valeur de pression déterminée, qui est choisie suffisamment élevée pour presser les extrémités des palettes contre un anneau de course, et, lorsque la vitesse de rotation (n) augmente, la pression à palettes arrière côté refoulement est réduite au moyen du dispositif de soupape.
